(19) Europäisches Patentamt
European Patent Office
Office européen des brevets

(11) **EP 3 392 671 A1**

(12) **EUROPEAN PATENT APPLICATION**
published in accordance with Art. 153(4) EPC

(43) Date of publication:
**24.10.2018 Bulletin 2018/43**

(51) Int Cl.:
***G01S 13/66*** (2006.01)      ***G01S 13/12*** (2006.01)
***G08G 5/00*** (2006.01)

(21) Application number: **16883585.8**

(22) Date of filing: **06.01.2016**

(86) International application number:
**PCT/JP2016/050254**

(87) International publication number:
**WO 2017/119081 (13.07.2017 Gazette 2017/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Mitsubishi Electric Corporation
Chiyoda-ku
Tokyo 100-8310 (JP)**

(72) Inventors:
• **KONISHI, Kyosuke
Tokyo 100-8310 (JP)**
• **OBATA, Yasushi
Tokyo 100-8310 (JP)**

(74) Representative: **Pfenning, Meinig & Partner mbB
Patent- und Rechtsanwälte
Theresienhöhe 11a
80339 München (DE)**

(54) **TARGET TRACKING DEVICE**

(57)    A target tracking apparatus (1) includes: a plurality of nth-time-around echo tracking filter units (3-n) for generating a candidate track of a target from information of the target on an assumption that n is an integer larger than or equal to 1 and that the target to be observed is present at a range observed as an nth-time-around echo with a premise that the information of the target observed by a radar (2) includes missed detection of the target and false detection of the target; a track reliability calculating unit (4) for calculating track reliability representing likelihood of the candidate track generated by the plurality of nth-time-around echo tracking filter units (3-n) with the premise that the information of the target includes missed detection of the target and false detection of the target; and a track determining unit (6) for determining a track to be displayed on a display device (7) from among the candidate tracks generated by the plurality of nth-time-around echo tracking filter units (3-n) on the basis of the track reliability calculated by the track reliability calculating unit (4).

FIG. 1

**Description**

TECHNICAL FIELD

The present disclosure relates to target tracking apparatuses for estimating one or more tracks of one or more targets from observation information of the targets such as an aircraft or the like detected by a radar apparatus or other apparatuses.

BACKGROUND ART

A pulse radar apparatus or other apparatuses transmit a pulse and receives a reflection pulse reflected by an observation target. A target tracking apparatus measures a range to a target on the basis of transmission/reception time, which is time from transmission to reception of a pulse by a pulse radar apparatus or other apparatuses. It is known that a phenomenon occurs in which a correct target position cannot be determined if the transmission/reception time of a pulse is longer than the pulse repetition interval (PRI) in transmitting pulses. This is because the transmission/reception time of the pulse and the range to the target do not correspond uniquely. This phenomenon is called "multiple-time-around echoes", "distance ambiguity", "range ambiguity", or "range folding".

Conventionally, some techniques for estimating a correct range to a target with respect to the multiple-time-around echoes are known.

A method disclosed in Non-Patent Literature 1 is a method of observing a target with multiple discrete PRIs and estimating a correct range to the target on the basis of a difference in the range direction of the multiple-time-around echoes on each PRI. This method is generally referred to as "Multiple PRI Ranging" or "Multiple Pulse Repetition Frequency (PRF) Ranging."

The methods disclosed in Non-Patent Literature 2 and Patent Literature 1 are methods of cyclically changing a modulation code of transmission pulse to suppress a second-time-around echo in demodulation of a received pulse, and thereby to extract only a first-time-around echo.

In a case where, of the multiple-time-around echoes, a pulse transmitted at a $(k - n - 1)$ th time frame is received at a kth time frame is hereinafter denoted as "nth-time-around echo". Letters $k$ and $n$ represent natural numbers. Also, "n" in "nth-time-around echo" is expressed as an "order of multiple-time-around echo".

CITATION LIST

PATENT LITERATURE

Patent Literature 1: JP H6-138215 A

NON-PATENT LITERATURES

Non-Patent Literature 1: M. Skolnik, "Radar Handbook Third Edition", (US), McGraw-Hill, February 2008, pp. 4.31-4.33.
Non-Patent Literature 2: FUKAO Shoichirou, HAMAZU Kyosuke, "Kisho To Taiki No Reidaa Rimoute Senshingu", Revised 2nd Edition, Kyoto University Press, March 30, 2009, pp. 285-287.

SUMMARY OF INVENTION

TECHNICAL PROBLEM

Multiple PRI ranging is based on a premise that the number of targets is known, that no unnecessary reflection pulses from objects other than the target are detected, and that there is no case where a reflection pulse from the target is buried in noise and is not detected. That is, for a reflection pulse received as a second-time-around echo, for example, in the Multiple PRI ranging, it is premised that the reflection pulse is detected in any observation in which the PRI has been changed. Note that, in the following descriptions, detection of an unnecessary reflection pulse from an object other than the target is referred to as "false detection", and a case where a reflection pulse from a target is buried in noise and is not detected is referred to as "missed detection".

Also, in a case where a reflection pulse from multiple targets are detected, there must be "the maximum number of targets + 1" discrete PRIs. This premise is reasonable in a high-PRF radar or a middle-PRF radar that observes a specific target frequently and aims at high precision velocity observation.

Therefore, in the Multiple PRI ranging, in the premise of a radar that observes a broad area, that is, in a case where the number of targets exceeding an assumed number are simultaneously observed, a case where false detection occurs, or a case where missed detection occurs since a cross-section of the target is small, there is a problem that a correct range to the target cannot be obtained.

In addition, there is a problem that, in the method of removing a second-time-around echo by changing a modulation code of a transmission pulse disclosed in Non Patent Literature 2 and Patent Literature 1, multiple-time-around echoes of a third-time-around or higher orders cannot be eliminated.

This does not pose a problem in a case where cross-sections of targets to be observed are all small and transmission and reception time is of a degree that the intensity of a reflection pulse from a distant location as far as exceeding twice a PRI can be deemed sufficiently low. On the other hand, under a condition where a small target at a short range and a large target at a distant location are simultaneously observed, correct positions and velocities of the small target and the large target that have different orders of multiple-time-around echoes cannot be obtained.

Embodiments of the present disclosure have been made in order to solve the above problems, and it is an object of the embodiments of the present disclosure to estimate a track of each target in a case where the number of targets is unknown, false detection occurs, missed detection of target occurs, and multiple-time-around echoes with different orders simultaneously occur.

SOLUTION TO PROBLEM

A target tracking apparatus according to the present disclosure includes: nth-time-around echo tracking filter units for generating a respective candidate track of a target from information of the target on an assumption that n is an integer larger than or equal to 1 and that the target to be observed is present at a range observed as an nth-time-around echo with a premise that the information of the target observed by a sensor includes missed detection of the target or false detection of the target; a track reliability calculating unit for calculating a track reliability representing likelihood of each candidate track generated by the nth-time-around echo tracking filter units with the premise that the information of the target includes missed detection of the target or false detection of the target; and a track determining unit for determining a track to be displayed on a display from among the candidate tracks generated by the nth-time-around echo tracking filter units on a basis of the track reliabilities calculated by the track reliability calculating unit.

ADVANTAGEOUS EFFECTS OF INVENTION

According to an aspect of embodiments, a candidate track of a target is generated assuming that the target to be observed is present at a range observed as an nth-time-around echo, and a track to be displayed on a display device is determined on the basis of reliability of the candidate track, and thus a track of each target can be estimated in a case where the number of targets is unknown, false detection occurs, missed detection of target occurs, and multiple-time-around echoes of different orders occur at the same time.

BRIEF DESCRIPTION OF DRAWINGS

FIG. 1 is a block diagram illustrating an exemplary configuration of a target tracking apparatus according to First Embodiment of the disclosure.
FIG. 2A is a conceptual diagram illustrating observation conditions with which the target tracking apparatus according to First Embodiment is used. FIG. 2B is a conceptual diagram illustrating exemplary observation results of targets.
FIG. 3 is a diagram illustrating an exemplary hardware configuration of the target tracking apparatus according to First Embodiment.
FIGS. 4A, 4B, and 4C are conceptual diagrams illustrating examples of a first-time-around echo track, a second-time-around echo track, and a third-time-around echo track generated by the target tracking apparatus according to First Embodiment.
FIG. 5 is a flowchart illustrating operations of a first-time-around echo tracking filter unit, an nth-time-around echo tracking filter unit, and a track reliability calculating unit of the target tracking apparatus according to First Embodiment.
FIG. 6 is a flowchart illustrating operations of a track determining unit of the target tracking apparatus according to First Embodiment.
FIG. 7 is a block diagram illustrating an exemplary configuration of a target tracking apparatus according to Second Embodiment of the disclosure.
FIG. 8 is a conceptual diagram illustrating an example of an mth/nth-time-around echo track in Second Embodiment.

FIG. 9 is a flowchart illustrating operations of an mth/nth-time-around echo tracking filter unit and a track reliability calculating unit of the target tracking apparatus according to Second Embodiment.

FIG. 10 is a block diagram illustrating an exemplary configuration of a target tracking apparatus according to Third Embodiment of the disclosure.

FIG. 11 is a flowchart illustrating operations of a track determining unit of the target tracking apparatus according to Third Embodiment.

DESCRIPTION OF EMBODIMENTS

To describe the disclosure further in detail, embodiments according to the disclosure will be described below with reference to the accompanying drawings.

First Embodiment

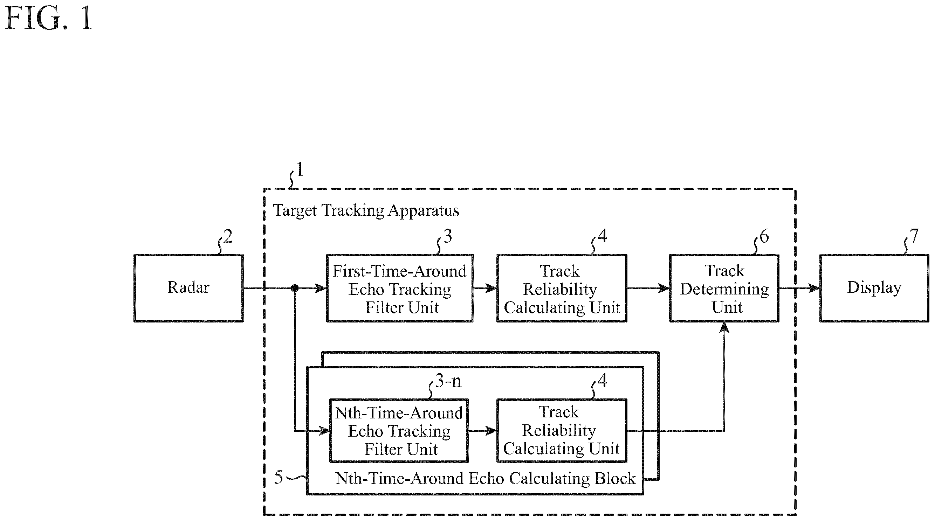

FIG. 1 is a block diagram illustrating an exemplary configuration of a target tracking apparatus 1 according to First Embodiment of the disclosure. Hereinafter, cases where the target tracking apparatus 1 according to each Embodiment of the present disclosure is used in combination with a radar 2, which is an existing radar apparatus, will be described.

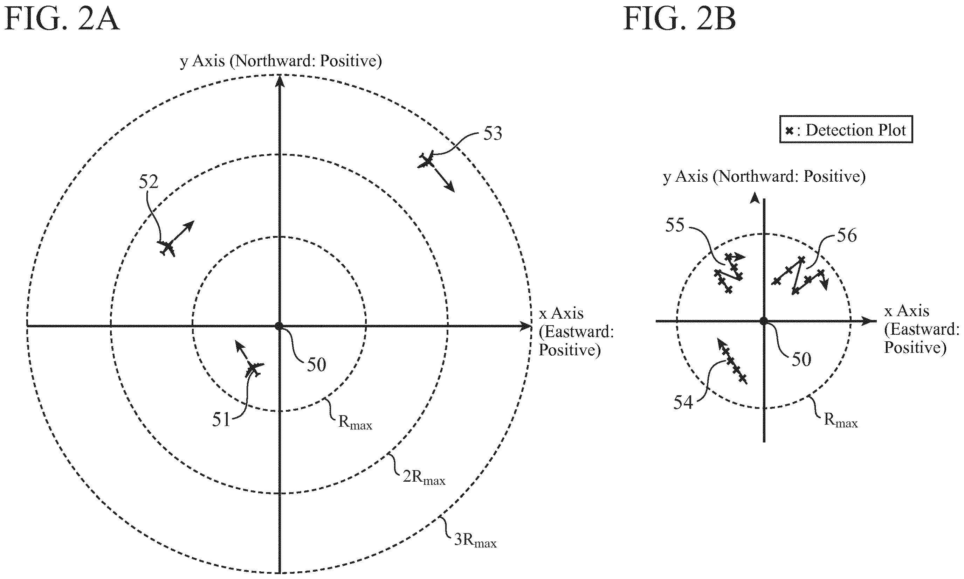

FIG. 2A is a conceptual diagram illustrating observation conditions with which the target tracking apparatus 1 according to First Embodiment is used. FIG. 2B is a conceptual diagram illustrating exemplary observation results of targets. In the figures, the x axis represents the east-west direction in which an eastward direction is positive, and the y axis represents the north-south direction in which a northward direction is positive.

As illustrated in FIG. 2A, it is assumed that unknown number of targets are present within an observation range of the radar 2 and that a position of each of the targets is observed as a mass point from the radar 2. It is also assumed that each of the targets may be present within the maximum observation range $R_{max}$ of the radar 2 or beyond the $R_{max}$.

Here, the maximum observation range $R_{max}$ of the radar 2 is defined as "the maximum range at which a target can be observed as a first-time-around echo" and is determined from Equation (1) below.

$$R_{\max} = \frac{c}{2} T_{PRI} \qquad ( 1 )$$

Here c is the speed of light, and $T_{PRI}$ is the pulse repetition interval (PRI).

Hereinafter, a target present at a range less than the maximum observation range $R_{max}$ from a radar origin 50 is referred to as a first-time-around echo target 51. Further, a target present at a range equal to or more than the maximum observation range $R_{max}$ and less than $2R_{max}$ is referred to as a second-time-around echo target 52. A target present at a range equal to or more than the maximum observation range $2R_{max}$ and less than $3R_{max}$ is referred to as a third-time-around echo target 53.

In a case where the radar 2 switches multiple discrete PRIs in each observation, detection plots of targets appear as illustrated in FIG. 2B. FIG. 2B is an example in which the radar 2 cyclically switches three discrete PRIs in each observation. A detection plot is positional information of a detected target, and in FIG. 2B, each detection plot of a first-time-around echo 54, a second-time-around echo 55, and a third-time-around echo 56 is indicated using an "x" mark. Since the maximum observation range $R_{max}$ varies depending on a PRI, a sequence of detection plots appears to be diverging in the range direction as the order of the multiple-time-around echoes increases.

The target tracking apparatus 1 receives such detection plots from the radar 2, determines motion characteristics of each target, and outputs the motion characteristics to a display 7. The motion characteristic(s) includes, for example, a position, velocity or acceleration of a target, and which is denoted as "tracking track".

As illustrated in FIG. 1, the target tracking apparatus 1 includes a first-time-around echo tracking filter unit 3, a track reliability calculating unit 4, an nth-time-around echo calculating block 5, and a track determining unit 6. The nth-time-around echo calculating block 5 includes n (n is an integer more than or equal to 2) nth-time-around echo tracking filter units 3-n and two track reliability calculating units 4. For example, when the second-time-around echo target 52 and the third-time-around echo target 53 are to be observed, the nth-time-around echo calculating block 5 includes a set of a second-time-around echo tracking filter unit 3-2 and a track reliability calculating unit 4 and a set of a third-time-around echo tracking filter unit 3-3 and a track reliability calculating unit 4.

Note that the configuration is not limited to provide one track reliability calculating unit 4 for one nth-time-around echo tracking filter unit 3-n. For example, a single track reliability calculating unit 4 may be provided for a plurality of nth-time-around echo tracking filter units 3-n, and this single track reliability calculating unit 4 may perform processing for the plurality of nth-time-around echo tracking filter units 3-n.

Note that, in FIG. 1, n is an integer larger than or equal to 2, and the first-time-around echo tracking filter unit

EP 3 392 671 A1

3 is distinguished from an nth-time-around echo tracking filter unit 3-n; however, substantial operations of the first-time-around echo tracking filter unit 3 and an nth-time-around echo tracking filter unit 3-n are not significantly different. Therefore, n may be an integer larger than or equal to 1, and an nth-time-around echo tracking filter unit 3-n where n = 1 may substitute the first-time-around echo tracking filter unit 3.

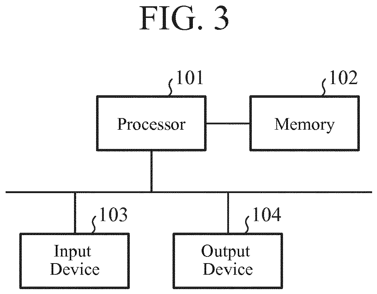

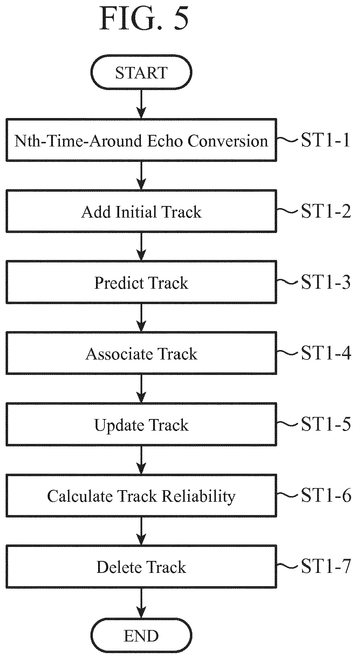

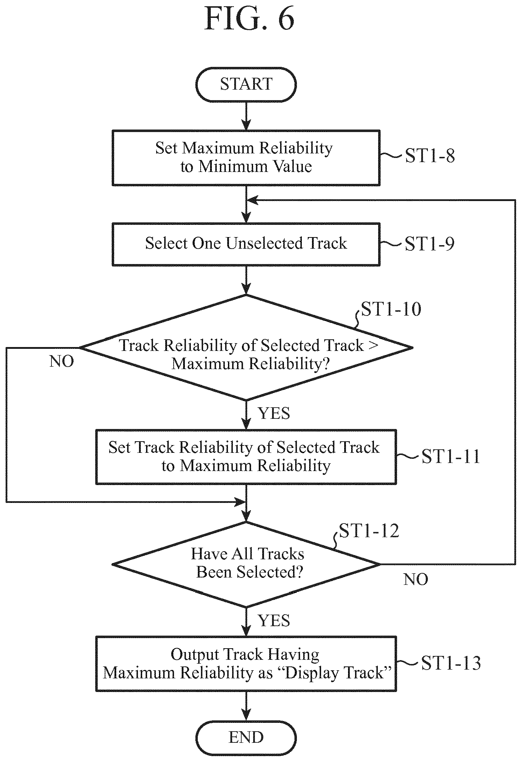

FIG. 3 is a diagram illustrating an exemplary hardware configuration of the target tracking apparatus 1. The first-time-around echo tracking filter unit 3, the track reliability calculating unit 4, the nth-time-around echo calculating block 5, and the track determining unit 6 in the target tracking apparatus 1 are embodied by a processor 101 that executes a program stored in a memory 102. The functions of the first-time-around echo tracking filter unit 3, the track reliability calculating unit 4, the nth-time-around echo calculating block 5, and the track determining unit 6 are implemented by software, firmware, or a combination of software and firmware. Software and firmware are described as a program and stored in the memory 102. The processor 101 reads and executes the program stored in the memory 102 and thereby implements the functions of the respective units. That is, the target tracking apparatus 1 includes the memory 102 for storing a program that causes respective steps illustrated in FIG. 5 and FIG. 6, which will be described later, to be executed as a result of execution thereof by the processor 101. This program can be described as a thing that causes a computer to execute a procedure or method of the respective units of the target tracking apparatus 1.

The processor 101 may be a central processing unit (CPU), a graphics processing unit (GPU), or the like. The memory 102 may be a hard disk drive (HDD), a solid state drive (SSD), a dynamic random access memory (DRAM), a flash memory, or the like.

The target tracking apparatus 1 also includes an input device 103 for inputting detection plots output from the radar 2 to the first-time-around echo tracking filter unit 3 and the nth-time-around echo calculating block 5. The input device 103 connects to the radar 2 via an interface such as the universal serial bus (USB) or Ethernet (registered trademark).

The target tracking apparatus 1 further includes an output device 104 for outputting the motion characteristics of each target determined by the track determining unit 6 to the display 7. The output device 104 connects to the display 7 via an interface such as Digital Visual Interface (DVI) (registered trademark) or High-Definition Multimedia Interface (HDMI; registered trademark).

The radar 2 includes existing devices such as a pulse transmitter, transmission/reception switching device, antenna, receiver, and signal detector (not illustrated), and observes a target position. The radar 2 outputs positional information of a target detected in the latest time frame, that is a detection plot, to the first-time-around echo tracking filter unit 3 and an nth-time-around echo tracking filter unit 3-n. Note that a detection plot may include false detection based on reflection pulses from an object other than the target. Also, it is assumed that a detection plot of each time frame also includes PRI information at the time of observation.

Note that the observation area of the radar 2 may be any area. A two-dimensional radar that observes the range and the bearing to the target may be employed, or a three-dimensional radar capable of further observing the elevation direction may be employed.

The first-time-around echo tracking filter unit 3 receives detection plots from the radar 2 and generates candidate tracking tracks for a first-time-around echo target on the assumption that all the detection plots are results of observation of the first-time-around echo target. Here, the tracking track of the first-time-around echo target includes both a series of estimates of the position, velocity, or the like of the first-time-around echo target in each time frame and a value representing error of the estimates. The first-time-around echo tracking filter unit 3 outputs the generated candidate tracking tracks to the track reliability calculating unit 4. Note that a tracking track generated by the first-time-around echo tracking filter unit 3 is denoted as a "first-time-around echo track" hereinafter.

The nth-time-around echo tracking filter unit 3-n receives detection plots from the radar 2 and generates a plurality of candidate tracking tracks for a nth-time-around echo target on the assumption that all the detection plots are results of observation of the nth-time-around echo target. The nth-time-around echo tracking filter unit 3-n outputs the generated candidate tracking tracks to a track reliability calculating unit 4 paired therewith in the nth-time-around echo calculating block 5. Note that a tracking track generated by the nth-time-around echo tracking filter unit 3-n is denoted as an "nth-time-around echo track" hereinafter.

The track reliability calculating unit 4 paired with the first-time-around echo tracking filter unit 3 receives the first-time-around echo tracks from the first-time-around echo tracking filter unit 3 and calculates a track reliability which is a value representing a likelihood of each first-time-around echo track. Then, the first-time-around echo tracking filter unit 3 outputs the first-time-around echo tracks and the track reliabilities to the track determining unit 6.

Similarly, the track reliability calculating unit 4 paired with the nth-time-around echo tracking filter unit 3-n in the nth-time-around echo calculating block 5 receives the nth-time-around echo tracks from the nth-time-around echo tracking filter unit 3-n and calculates a track reliability representing a likelihood of each nth-time-around echo track. Then, the track reliability calculating unit 4 outputs the nth-time-around echo tracks and the track reliabilities to the track determining unit 6.

A value of the track reliability increases as the tracking track approaches a motion model that is premised in

5

the first-time-around echo tracking filter unit 3 and the nth-time-around echo tracking filter unit 3-n. For example, in a case where a constant velocity motion model is premised, a tracking track generated by more linear detection plots has a larger value.

The track determining unit 6 receives the first-time-around echo tracks and the track reliabilities thereof from the track reliability calculating unit 4 paired with the first-time-around echo tracking filter unit 3, receives the nth-time-around echo tracks and the track reliabilities thereof from the track reliability calculating unit 4 paired with the nth-time-around echo tracking filter unit 3-n, and selects a tracking track having the maximum track reliability. Then, the track determining unit 6 outputs the tracking track having the maximum track reliability to the display 7 as "display track".

The display 7 receives the display track from the track determining unit 6 and displays a series of estimates of the position, velocity, or the like of a target included in the display track, a value representing an error of the estimates, or a track reliability.

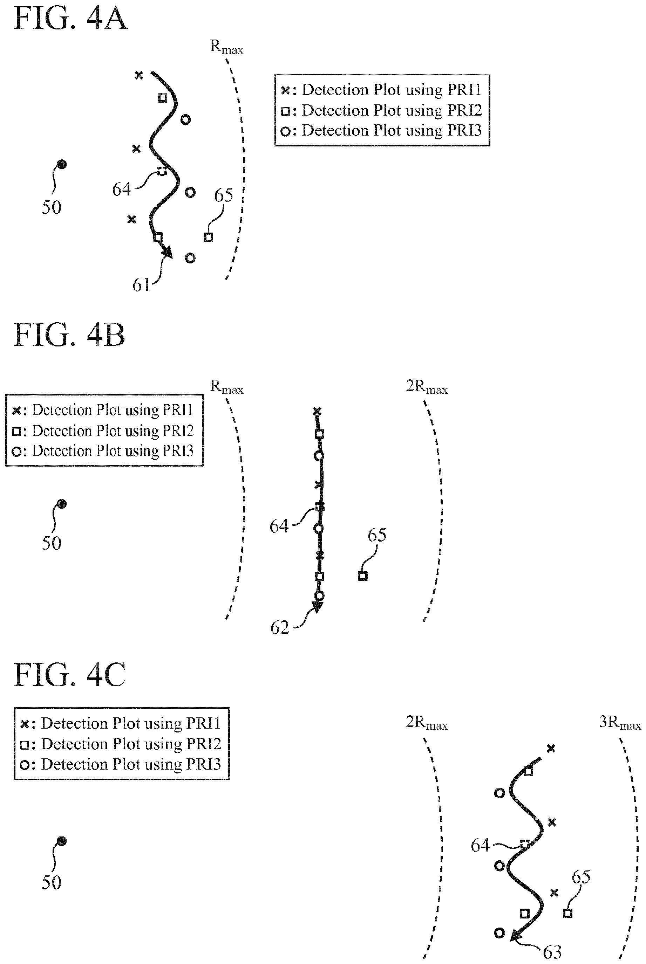

FIGS. 4A, 4B, and 4C are conceptual diagrams illustrating examples of a first-time-around echo track, a second-time-around echo track, and a third-time-around echo track generated by the target tracking apparatus 1 according to First Embodiment. In this example, it is assumed that detection plots observed by the radar 2 while the radar 2 cyclically switching three types of PRIs (PRI 1, PRI 2, and PRI 3) for the multiple-time-around echo having an order of 2 have been input to the target tracking apparatus 1. It is also assumed that the first-time-around echo tracking filter unit 3 and the nth-time-around echo tracking filter unit 3-n have generated a tracking track based on a constant velocity motion model.

FIG. 4A illustrates an example of a first-time-around echo track 61 output from the first-time-around echo tracking filter unit 3.

The first-time-around echo tracking filter unit 3 generates a candidate tracking track under an assumption that "each detection plot is a result of observation of a target present at a range less than the maximum observation range $R_{max}$". The first-time-around echo tracking filter unit 3 generates a tracking track on the premise that a missed detection 64 or false detection 65 occurs with a certain probability. Specifically, in a case where a detection plot is missing, the first-time-around echo tracking filter unit 3 generates the first-time-around echo track 61 with the missed detection 64 being interpolated by, for example, extending a preceding tracking track with an estimated velocity. The first-time-around echo tracking filter unit 3 generates the first-time-around echo track 61 not including the false detection 65 by, for example, ignoring a detection plot distant from the tracking track.

FIG. 4B illustrates an example of a second-time-around echo track 62 output from the second-time-around echo tracking filter unit 3-2. The second-time-around echo tracking filter unit 3-2 is an nth-time-around echo tracking filter unit 3-n where n = 2.

The second-time-around echo tracking filter unit 3-2 assumes that "each detection plot is a result of observing a target at a range more than or equal to the maximum observation range $R_{max}$ and less than $2R_{max}$" and generates a candidate tracking track after moving each detection plot by a range that depends on a PRI in the range direction with respect to the radar origin 50. At this time, like the first-time-around echo tracking filter unit 3, the second-time-around echo tracking filter unit 3-2 generates a tracking track on the premise that a missed detection 64 or false detection 65 occurs with a certain probability.

FIG. 4C illustrates an example of a third-time-around echo track 63 output from the third-time-around echo tracking filter unit 3-3. The third-time-around echo tracking filter unit 3-3 is an nth-time-around echo tracking filter unit 3-n where n = 3.

The third-time-around echo tracking filter unit 3-3 assumes that "each detection plot is a result of observing a target at a range more than or equal to the maximum observation range $2R_{max}$ and less than $3R_{max}$" and generates a candidate tracking track after moving each detection plot by a range that depends on a PRI in the range direction with respect to the radar origin 50. At this time, like the first-time-around echo tracking filter unit 3, the third-time-around echo tracking filter unit 3-3 generates a tracking track on the premise that a missed detection 64 or false detection 65 occurs with a certain probability.

Of the first-time-around echo track 61, the second-time-around echo track 62, and the third-time-around echo track 63 illustrated in FIGS. 4A to 4C, a tracking track closest to the constant velocity motion model which is the motion model is the second-time-around echo track 62. Therefore, in this example, the track reliability of the second-time-around echo track 62 calculated by the track reliability calculating unit 4 paired with the second-time-around echo tracking filter unit 3-2 is higher than the track reliabilities calculated by the other track reliability calculating units 4. Thus, the track determining unit 6 determines the second-time-around echo track 62 as display track and outputs the display track to the display 7.

Next, operations of the target tracking apparatus 1 according to Embodiment 1 will be described in detail with reference to flowcharts of FIGS. 5 and 6.

First, operations of the first-time-around echo tracking filter unit 3, the nth-time-around echo tracking filter unit 3-n, and the track reliability calculating units 4 at time k will be described with reference to the flowchart of FIG. 5.

Note that, in the following, n is a natural number, and operations of the first-time-around echo tracking filter unit 3 will be described together as operations of the nth-time-around echo tracking filter unit 3-n where n = 1.

Before explaining the operations, symbols used in processing will be defined.

A tracking track representing estimates of a target includes a "state vector" representing motion characteristics and an "error covariance matrix" representing ambiguity of estimation.

In the following descriptions, a state vector $x_{k|k}$ at time k and an error covariance matrix $P_{k|k}$ are defined by Equations (2) and (3), respectively. Note that time k is defined as a "kth observation time frame (k is a natural number) from the start of the observation". The target tracking apparatus 1 repeatedly executes processing illustrated in the flowcharts of FIG. 5 and FIG. 6 for each observation time frame.

$$ x_{k|k} = \begin{pmatrix} x & y & z & v_x & v_y & v_z \end{pmatrix}^T \qquad (2) $$

$$ P_{k|k} = \begin{pmatrix} P_{11} & P_{12} & P_{13} & P_{14} & P_{15} & P_{16} \\ P_{12} & P_{22} & P_{23} & P_{24} & P_{25} & P_{26} \\ P_{13} & P_{23} & P_{33} & P_{34} & P_{35} & P_{36} \\ P_{14} & P_{24} & P_{34} & P_{44} & P_{45} & P_{46} \\ P_{15} & P_{25} & P_{35} & P_{45} & P_{55} & P_{56} \\ P_{16} & P_{26} & P_{36} & P_{46} & P_{56} & P_{66} \end{pmatrix} \qquad (3) $$

Here, the superscript T in Eq. (2) represents the transpose of the matrix. Letters x and $v_x$ represent the position and velocity in the x axis. Letters y and $v_y$ represent the position and velocity in the y axis. Letters z and $v_z$ represent the position and velocity in the z axis. The x axis is set to the east-west direction in which an eastward direction is positive as illustrated in FIG. 2A. The y axis is set to the north-south direction in which a northward direction is positive as illustrated in FIG. 2A. It is assumed that the z axis is set to the altitude direction in which an upward direction is positive.

Moreover, $P_{ij}$ (i, j = 1 to 6) in Eq. (3) represents an error covariance of an ith row component and a jth column component of $x_{k|k}$.

Note that a plurality of tracking tracks are expressed as $x_{k|k}^{(1)}$, $x_{k|k}^{(2)}$, ..., and $P_{k|k}^{(1)}$, $P_{k|k}^{(2)}$,....

Also, a detection plot obtained at time k from the radar 2 is denoted as "detection plot $z_k$" and is defined as in Equation (4).

$$ z_k = \begin{pmatrix} z_{k,x} & z_{k,y} & z_{k,z} \end{pmatrix}^T \qquad (4) $$

Here, $z_{k,x}$, $z_{k,y}$, and $z_{k,z}$ each represent a position along the x-, y-, and z-axes of a detection plot. Note that in a case where plural detection plots are obtained at time k, the detection plots are expressed as $z_k^{(1)}$, $z_k^{(2)}$, ....

Moreover, the state vector $x_{k|k}$ and the error covariance matrix $P_{k|k}$ represent a "tracking track at time k estimated on the basis of detection plots up to time k". Meanwhile, "a tracking track at time k estimated on the basis of detection plots up to time k - 1" is represented as a "predicted track" by using a state vector $x_{k|k-1}$ and an error covariance matrix $P_{k|k-1}$. Elements of each of the matrices are assumed to be the same as those of Eqs. (2) and (3).

Also, track reliability of a tracking track is denoted as $b_{k|k}$, and track reliability of a predicted track is denoted as $b_{k|k-1}$.

In step ST1-1, each of the nth-time-around echo tracking filter units 3-n in the case where n is an integer larger than or equal to 1, including the first-time-around echo tracking filter unit 3, performs nth-time-around echo conversion. The nth-time-around echo tracking filter unit 3-n moves the position of the detection plot by a certain range from the radar origin 50 in the range direction assuming that the detection plot input from the radar 2 is an observation result of the target of the nth-time-around echo.

For example, in a case where a detection plot $z_k$ observed where PRI is $T_{PRI}$ is converted, a range ΔR to be moved is determined from Equation (5).

$$ \Delta R = \frac{c(n-1)}{2} T_{PRI} \qquad (5) $$

At this time, a detection plot $z_k'$ after the conversion is as expressed in Equation (6).

$$z_k' = \begin{pmatrix} \left(z_{k,R} + \Delta R\right)\cos\left(z_{k,El}\right)\sin\left(z_{k,By}\right) \\ \left(z_{k,R} + \Delta R\right)\cos\left(z_{k,El}\right)\cos\left(z_{k,By}\right) \\ \left(z_{k,R} + \Delta R\right)\sin\left(z_{k,El}\right) \end{pmatrix}^T \qquad (6)$$

Letters $z_{k,R}$, $z_{k,By}$, and $z_{k,El}$ in Eq. (6) are detection plots in a polar coordinate system and are defined by Equation (7).

$$\begin{pmatrix} z_{k,R} \\ z_{k,El} \\ z_{k,By} \end{pmatrix} = \begin{pmatrix} \sqrt{z_{k,x}^2 + z_{k,y}^2 + z_{k,z}^2} \\ \sin^{-1}\left(z_{k,z}/z_{k,R}\right) \\ \tan^{-1}\left(z_{k,x}/z_{k,y}\right) \end{pmatrix} \qquad (7)$$

Any of detection plots in subsequent steps ST1-2 to ST1-7 is a detection plot after the above conversion.

In step ST1-2, each of the nth-time-around echo tracking filter units 3-n including the first-time-around echo tracking filter unit 3 performs addition of an initial track. The nth-time-around echo tracking filter unit 3-n generates a new candidate tracking track at time k - 1 on the basis of past detection plots. Since the initial value of the tracking track for which prediction and updating are repeated in accordance with repetition of the processing illustrated in the flowchart of FIG. 5 is set, a track generated here is referred to as an "initial track".

For example, a state vector $x_{k-1|k-1,New}$ of the initial track at time k - 1 and an error covariance matrix $P_{k-1|k-1,New}$ are set in accordance with Equations (8) and (9) on the basis of a detection plot $z_{k-1}$ at time k - 1 and a detection plot $z_{k-2}$ at time k - 2.

$$x_{k-1|k-1,New} = \frac{z_{k-1} - z_{k-2}}{\Delta\tau} \qquad (8)$$

$$P_{k-1|k-1,New} = \begin{pmatrix} R_{k-1} & \dfrac{R_{k-1}}{\Delta\tau} \\ \dfrac{R_{k-1}}{\Delta\tau} & \dfrac{1}{\left(\Delta\tau\right)^2}\left(R_{k-1} + R_{k-2}\right) \end{pmatrix} \qquad (9)$$

Here, $\Delta\tau$ represents a time frame interval, and $R_k$ is a parameter with a $3 \times 3$ matrix representing observation error covariance at time k.

Moreover, track reliability $b_{k-1|k-1,New}$ of the initial track, which is an initial value of track reliability calculated in step ST1-6 which will be described later is set in accordance with Equation (10).

$$b_{k-1|k-1,New} = \log\left(\frac{\beta_{NT}}{\beta_{FT}}\right) \qquad (10)$$

Here, $\beta_{FT}$ is a scalar parameter representing the number of false detections per unit volume, and $\beta_{NT}$ is a scalar parameter representing the number of targets appearing per unit volume.

In a case where there are plural past detection plots, the nth-time-around echo tracking filter unit 3-n generates the initial track for all combinations of detection plots. Alternatively, in a case where a velocity condition of a target can be set, an initial track may be set only from $z_{k-1}$ and $z_{k-2}$ within a certain distance that the target can travel at that velocity.

Meanwhile, detection plots as the basis of generation of an initial track may be a combination other than that of detection plots at time k - 1 and time k - 2. For example, a method of generating from a combination of detection plots of past three frames or a method of generating only from a detection plot(s) of a past one frame may be employed.

In step ST1-3, each of the nth-time-around echo tracking filter units 3-n including the first-time-around echo tracking filter unit 3 performs track prediction. An nth-time-around echo tracking filter unit 3-n calculates a predicted track at time k on the basis of the initial track generated in step ST1-2 and the tracking track output by the nth-time-around echo tracking filter unit 3-n at previous time k - 1.

Note that, while repeating the processing illustrated in the flowchart of FIG. 5, the nth-time-around echo tracking filter unit 3-n generates a predicted track from the initial track at the time of first execution of step ST1-3 and generates a predicted track from the initial track generated in the immediately preceding ST1-2 and the tracking track at the previous time k - 1 at second and subsequent time of execution of step ST1-3.

The tracking track at the previous time k - 1 refers to a tracking track output from the nth-time-around echo tracking filter unit 3-n to the track reliability calculating unit 4 after step ST1-5 in a previous repetition.

The nth-time-around echo tracking filter unit 3-n calculates the state vector $x_{k|k-1}$ and the error covariance matrix $P_{k|k-1}$ of a predicted track in accordance with Equations (11) and (12) for the state vector $x_{k-1|k-1}$ and the error covariance matrix $P_{k-1|k-1}$ of the tracking track at time k - 1 or for $x_{k-1|k-1,New}$ and $P_{k-1|k-1,New}$ in the case of the initial track.

$$x_{k|k-1} = \Phi x_{k-1|k-1} \qquad (1\ 1)$$

$$P_{k|k-1} = \Phi P_{k-1|k-1} \Phi^T + Q \qquad (1\ 2)$$

Here, $\Phi$ is a parameter of a 6 × 6 matrix representing a kinematic motion model of a target. For example, in a case where constant velocity motion is assumed as the kinematic motion of a target, $\Phi$ is expressed as is Equation (13). Meanwhile, Q is a parameter of a 6 × 6 matrix representing errors from the kinematic motion model. For example, in a case where it is assumed that there is ambiguity in a standard deviation q in a velocity component of a constant velocity motion model, Q is expressed as in Equation (14).

$$\Phi = \begin{pmatrix} I_3 & \Delta\tau I_3 \\ 0I_3 & I_3 \end{pmatrix} \qquad (1\ 3)$$

$$Q = q^2 \times \begin{pmatrix} (\Delta\tau)^2 I_3 & \Delta\tau I_3 \\ \Delta\tau I_3 & I_3 \end{pmatrix} \qquad (1\ 4)$$

Here, $I_3$ is a 3 × 3 unit matrix.

Further, for the track reliability $b_{k-1|k-1}$ of the tracking track at time k - 1 or for $b_{k-1|k-1,New}$ in the case of the initial track, the track reliability $b_{k|k-1}$ of the predicted track at time k is expressed as in Equation (15) .

$$b_{k|k-1} = b_{k-1|k-1} \qquad (1\ 5)$$

In step ST1-4, each of the nth-time-around echo tracking filter units 3-n including the first-time-around echo tracking filter unit 3 performs track association. To obtain detection plots to be used for updating the predicted track in the next step ST1-5, an nth-time-around echo tracking filter unit 3-n extracts detection plots at time k located in the neighborhood of the predicted track at time k.

The nth-time-around echo tracking filter unit 3-n extracts a detection plot that satisfies the condition of "located in the neighborhood" with respect to the state vector for $x_{k|k-1}$ and error covariance matrix $P_{k|k-1}$ of a certain predicted track. Where a definition of "neighborhood" is defined using, for example, a normalized distance that is a residual in position normalized with an error (Mahalanobis distance), the nth-time-around echo tracking filter unit 3-n extracts the detection plot $z_k$ that satisfies the following conditional expression (16) as a "detection plot within an association gate".

$$\left(z_k - Hx_{k|k-1}\right)^T \left(HP_{k|k-1}H^T + R\right)^{-1} \left(z_k - Hx_{k|k-1}\right) < \delta^2_{Gate} \qquad (1\ 6)$$

Here, $\delta_{Gate}$ is a scalar parameter that determines the magnitude of the association gate. Moreover, H is a matrix for extracting the same component as that of the detection plot from the state vector and is defined by Equation (17).

$$H = \left(I_3 \quad 0I_3\right) \qquad (1\ 7)$$

In step ST1-5, each of the nth-time-around echo tracking filter units 3-n including the first-time-around echo tracking filter unit 3 performs track update. An nth-time-around echo tracking filter unit 3-n generates a tracking track at time k from the predicted track and detection plots in an association gate thereof. In addition, the nth-time-around echo tracking filter unit 3-n also generates a track that represents a case where the predicted track is not observed as a detection plot at time k as a tracking track at time k.

When the nth-time-around echo tracking filter unit 3-n updates the state vector $x_{k|k-1}$ and the error covariance matrix $P_{k|k-1}$ of a predicted track by using the detection plot $z_k$ within the association gate, the nth echo tracking filter unit 3-n determines the state vector $x_{k|k}$ and the error covariance matrix $P_{k|k}$ of a tracking track from the following Equations (18) and (19).

$$x_{k|k} = x_{k|k-1} + K\left(z_k - Hx_{k|k-1}\right) \qquad (1\ 8)$$

$$P_{k|k} = P_{k|k-1} - KHP_{k|k-1} \qquad (1\ 9)$$

Here, K is a filter gain representing the degree to which the detection plot $z_k$ contributes to the tracking track, and is defined by the following Equation (20).

$$K = P_{k|k-1}H^T \left(HP_{k\,k-1}H^T + R\right)^{-1} \qquad (2\ 0)$$

The nth-time-around echo tracking filter unit 3-n performs the above processing on all detection plots within the association gate. Therefore, in a case where m detection plots have been obtained within the association gate, m candidate tracking tracks $x_{k|k}^{(1)}$, ..., $x_{k|k}^{(m)}$ are generated.

In addition, the nth-time-around echo tracking filter unit 3-n also generates a tracking track in accordance with the following Equations (21) and (22) as a candidate tracking track that represents a case where the predicted track is not observed as a detection plot at time k.

$$x_{k|k}^{(m+1)} = x_{k|k-1} \qquad (2\ 1)$$

$$P_{k|k}^{(m+1)} = P_{k|k-1} - KHP_{k|k-1} \qquad (2\ 2)$$

Of the (m + 1) tracking tracks generated in the above step ST1-5, a true tracking track is one at most. However, narrowing down to a correct track is not performed at this point since the likelihood of each of the tracking tracks is evaluated in the following step ST1-6, false tracking track are removed in step ST1-7, and then the track determining unit 6 determines a final tracking track to be displayed.

In step ST1-6, each of the track reliability calculating units 4 paired with an nth-time-around echo tracking filter unit 3-n including the first-time-around echo tracking filter unit 3 performs calculation of track reliability. The track reliability calculating unit 4 calculates a value representing the likelihood of each tracking track generated in step ST1-5 as "track reliability" from the predicted track and the detection plots within the association gate.

Assume that, as a result of updating the state vector $x_{k|k-1}$ and the error covariance matrix $P_{k|k-1}$ of a certain predicted track by using the detection plot $z_k$ in the association gate, $x_{k|k}$ and $P_{k|k}$ of the tracking track at time k are derived. At this time, the track reliability $b_{k|k}$ of the tracking track at time k is defined as a value that increases more from the track reliability $b_{k|k-1}$ of the predicted track as a residual between the predicted track and the detection plot is smaller.

There are various definitions for a value representing likelihood. In the following, track reliability described in "Applications of MHT to Dim Moving Targets" (G.C.Demos, R.A.Ribas, T.J.Broida, and S.S.Blackman, Proceedings of SPIE, Signal and Data Processing of Small Targets 1990, October 1990, vol. 1305, pp. 297-309) will be explained as an example.

If reliability is defined as a logarithm of a ratio of a "probability that the predicted track $x_{k|k-1}$ is obtained as the detection plot $z_k$ (likelihood of the predicted track $x_{k|k-1}$ with respect to the detection plot $z_k$)" to a "probability that the detection plot $z_k$ is false detection", then the track reliability $b_{k|k}$ is determined from the following Equation (23).

$$b_{k|k} = \log\left( \frac{p_d \exp\left(-d^2/2\right)}{\beta_{FT} \left(2\pi\right)^M \sqrt{\left|HP_{k|k-1}H^T + R\right|}} \right) + b_{k|k-1} \qquad (2\,3)$$

Here, M is the number of rows of the state vector. Letters $p_d$ is a scalar parameter representing the probability that a target is detected. Letter d is the Mahalanobis distance defined by Equation (24).

$$d^2 = \left(z_k - Hx_{k|k-1}\right)^T \left(HP_{k|k-1}H^T + R\right)^{-1} \left(z_k - Hx_{k|k-1}\right) \qquad (2\,4)$$

Note that the reliability of a tracking track in the case where the predicted track is not observed as a detection plot at time k, that is, the reliability of the track updated in accordance with Eqs. (21) and (22) in step ST1-5 is determined from Equation (25).

$$b_{k|k} = \log\left(1 - p_d\right) + b_{k|k-1} \qquad (2\,5)$$

In step ST1-7, each of the track reliability calculating units 4 paired with an nth-time-around echo tracking filter unit 3-n including the first-time-around echo tracking filter unit 3 performs deletion of tracks. The track reliability calculating unit 4 deletes tracking tracks having a low track reliability from among the tracking tracks at time k having been generated in step ST1-6 in order to delete tracks generated or updated only with false detection.

The track reliability calculating unit 4 deletes, does not output to the track determining unit 6, and does not use, in step ST1-3 at subsequent time k + 1, a tracking track that satisfies inequality (26) below.

$$b_{k\,k} < b_{Th} \qquad (2\,6)$$

Here, $b_{Th}$ is a scalar parameter representing a lower limit threshold value of track reliability.

The track reliability calculating unit 4 outputs tracking tracks which have not been deleted here to the track determining unit 6 as "nth-time-around echo tracks at time k".

As a result of the above steps ST1-1 to ST1-7, the nth-time-around echo tracking filter units 3-n including the first-time-around echo tracking filter unit 3 and the track reliability calculating units 4 paired therewith operate. Here, n is an integer larger than or equal to 1, and the maximum value of n is preset as the maximum order of multiple-time-around echoes that can be observed. For example, n = 1, 2, and 3 are set under an observation condition that a third-time-around echo target may be detected. In addition to the first-time-around echo tracking filter unit 3, a second-time-around echo tracking filter unit 3-2 and a third-time-around echo tracking filter unit 3-3 separately execute the aforementioned steps ST1-1 to ST1-7 in parallel.

Note that, in the above description, the case of using the constant velocity motion model as the kinematic motion model of the target has been described; however, other motion models such as constant acceleration motion model that also estimates the acceleration of the target or uniform circular motion model that assumes a turning trajectory of the target may be used. Moreover, in the above description, the case where an observation result of the target is obtained as a position in the north reference orthogonal coordinate system as an observation model of the target has been described; however, other observation models such as an observation model that represents the position of a target by a polar coordinate system (range, elevation, and bearing) may be used.

Subsequently, the operation of the track determining unit 6 at time k will be described along the flowchart of FIG. 6. The track determining unit 6 receives the nth-time-around echo track at time k and the track reliability thereof from each of the track reliability calculating units 4 paired with the nth-time-around echo tracking filter units 3-n including the first-time-around echo tracking filter unit 3 and performs processing illustrated in the flowchart of FIG. 6.

First in step ST1-8, the track determining unit 6 sets provisional maximum reliability to the minimum value, that is, the minimum negative value in a program.

In step ST1-9, the track determining unit 6 selects one unselected tracking track in processing at time k from among the nth-time-around echo tracks having been received.

In step ST1-10, the track determining unit 6 compares the track reliability of the selected tracking track with the provisional maximum reliability. If the track reliability of the selected tracking track is larger than the provisional maximum reliability ("YES" in step ST1-10), the track determining unit 6 proceeds to step ST1-11. On the other hand, if the track reliability of the selected tracking track is smaller than or equal to the provisional maximum reliability ("NO" in step ST1-10), the track determining unit 6 skips step ST1-11 and proceeds to step ST1-12.

In step ST1-11, the track determining unit 6 overwrites the provisional maximum reliability with the track reliability of the selected tracking track.

In step ST1-12, the track determining unit 6 determines whether all the tracking tracks have been selected from the nth-time-around echo tracks having been received. If all the tracking tracks have been selected ("YES" in step ST1-12), the track determining unit 6 proceeds to step ST1-13. On the other hand, if an unselected tracking track remains ("NO" in step ST1-12), the track determining unit 6 returns to step ST1-9.

In step ST1-13, the track determining unit 6 outputs a tracking track having the maximum reliability as "display track" to the display 7.

As a result of the above steps ST1-8 to ST1-13, the display track is output to the display 7.

The display 7 displays the display track received from the track determining unit 6 on a screen. Information displayed at this time includes the position and the velocity included in a state vector of the display track, an ellipse representing the magnitude of errors determined from an error covariance matrix of the display track, the number of orders of the multiple-time-around echoes, the track reliability of the display track, etc. Note that the display 7 can change the displayed information depending on a preset condition or an input from a user.

According to First Embodiment configured in the above manner, candidate tracking tracks are generated by the first-time-around echo tracking filter unit 3 and the nth-time-around echo tracking filter units 3-n by assuming an order of the multiple-time-around echoes, the likelihood of each of the tracking tracks is evaluated by the track reliability calculating unit 4, and the order of the final multiple-time-around echo is determined by the track determining unit 6. Therefore, it is possible to estimate a track of a target from detection plots of a distant target, especially a target present at a range more than or equal to the maximum observation range $R_{max}$ of the radar 2. This is advantageous in that the maximum range of a target from which a tracking track can be obtained can be extended without changing configurations of a transmitter, an antenna, a receiver, and other components in the radar 2. It is advantageous also in that, since a tracking track can be obtained for any number of orders of multiple-time-around echo targets by the nth-time-around echo calculating blocks 5 formed by any number of pairs of the nth-time-around echo tracking filter units 3-n and the track reliability calculating units 4, there is no fundamental upper limit on the range of a target from which a tracking track can be obtained as long as the target is observed by the radar 2.

Furthermore, according to First Embodiment, unlike the conventional multi-RPF ranging, even in the case where missed detection due to a small size of a target and false detection due to a reflection pulse from an object other than the target occur, it is possible to estimate a track of the target at a range more than or equal to the maximum observation range $R_{max}$. This is because the first-time-around echo tracking filter unit 3 and the nth-time-around echo tracking filter units 3-n generate the tracking tracks from a time series of detection plots using Eqs. (21) and (22) and narrow down the detection plots in step ST1-4 on the premise that missed detection and false detection occur with a certain probability. This is also because the track reliability calculating unit 4 calculates the reliability of each of the tracking tracks using parameters such as the detection probability $p_d$ and the probability of false detection $\beta_{FT}$ in Eqs. (10), (23), and (25) on the premise that missed detection and false detection occur with a certain probability.

Furthermore, according to First Embodiment, unlike the conventional method of phase-modulating a transmission pulse, a track of a target can be estimated even in a case where the number of orders of multiple-time-around echoes is larger than or equal to three.

Moreover, according to First Embodiment, unlike the Multiple PRI ranging which requires detection plots of more types of PRIs for estimating the position as a target has a multiple-time-around echo of a larger order, it is possible to estimate a track for a multiple-time-around echo target of any order from a time series of detection plots of at least two types of PRIs out of PRI1, PRI2, ..., PRIN (N is an integer larger than or equal to 2).

Therefore, the target tracking apparatus 1 according to First Embodiment is capable of estimating a track of each target in a case where the number of targets is unknown, false detection occurs, missed detection of target occurs, and multiple-time-around echoes of different orders simultaneously occur.

Second Embodiment.

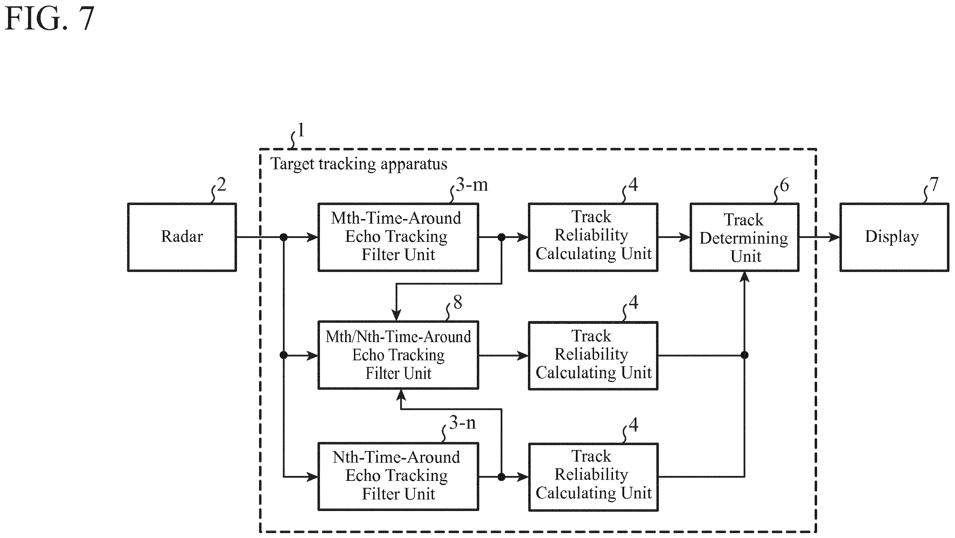

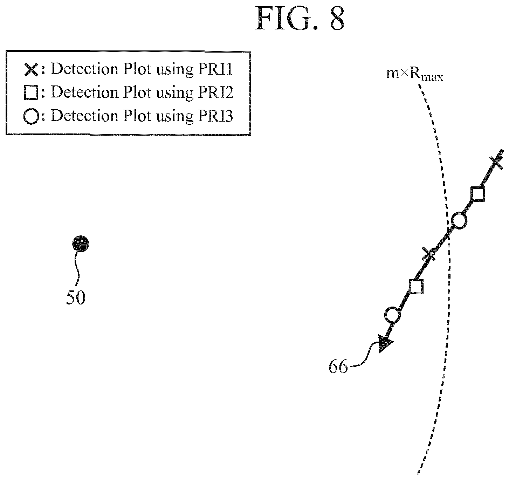

FIG. 7 is a block diagram illustrating an exemplary configuration of a target tracking apparatus 1 according to Second Embodiment of the disclosure. In First Embodiment, it is premised that the number of orders of the multiple-time-around echoes does not change during observation. However, in reality, there may be a case where a target that moves so as to cross a boundary of m times (m is an integer larger than or equal to 1) the maximum observation range $R_{max}$ as illustrated in FIG. 8 as an mth/nth-time-around echo track 66, and nth-time-around echo targets (n is an integer larger than or equal to 1, and m < n holds) may become mth-time-around echo targets in the middle of observation.

Accordingly, in Second Embodiment, a track of a multiple-time-around echo target of which order of a multiple-time-around echo changes between n and m (hereinafter referred to as mth/nth-time-around echo tracks) is also estimated. The maximum value of n is the largest number of order of multiple-time-around echoes that can be observed. Moreover, although FIG. 8 illustrates the case where there is only one boundary to be crossed; however, embodiments of the present disclosure are not limited to this, and plural boundaries may be crossed.

As illustrated in FIG. 7, the target tracking apparatus 1 according to Second Embodiment includes an mth-time-around echo tracking filter unit 3-m, an nth-time-around echo tracking filter unit 3-n, an mth/nth-time-around echo tracking filter unit 8, a plurality of track reliability calculating units 4, and a track determining unit 6.

Note that, as described above, m and n are integers larger than or equal to 1, and m < n holds. The mth-time-around echo tracking filter unit 3-m is equivalent to the first-time-around echo tracking filter unit 3 of First Embodiment where m = 1, and the mth-time-around echo tracking filter unit 3-m is equivalent to the nth-time-around echo tracking filter unit 3-n of First Embodiment where m ≥ 2.

That is, implementation methods and the operation of the mth-time-around echo tracking filter unit 3-m, the nth-time-around echo tracking filter unit 3-n, the track reliability calculating units 4, and the track determining unit 6 are similar to those of First Embodiment, and thus descriptions thereof will be omitted.

The mth/nth-time-around echo tracking filter unit 8 is a multiple-time-around echo tracking filter unit.

The mth/nth-time-around echo tracking filter unit 8 is embodied by the processor 101 that executes a program stored in the memory 102 in FIG. 3. By executing the program stored in the memory 102 by the processor 101, the function of the mth/nth-time-around echo tracking filter unit 8 is implemented.

The mth/nth-time-around echo tracking filter unit 8 receives a detection plot in the latest time frame from a radar 2. In addition, the mth/nth-time-around echo tracking filter unit 8 receives an mth echo track in past time frames from the mth-time-around echo tracking filter unit 3-m and also receives an nth-time-around echo track in past time frames from the nth-time-around echo tracking filter unit 3-n. The mth/nth-time-around echo tracking filter unit 8 generates a tracking track of a multiple-time-around echo target of which order of a multiple-time-around echo changes between n and m during observation and outputs the tracking track to a track reliability calculating unit 4 paired therewith.

The track reliability calculating unit 4 paired with the mth/nth-time-around echo tracking filter unit 8 receives the mth/nth-time-around echo track from the mth/nth-time-around echo tracking filter unit 8 and calculates the track reliability which is a value representing the likelihood of the mth/nth-time-around echo track. Then, the track reliability calculating unit 4 outputs the mth/nth-time-around echo track and the track reliability to the track determining unit 6.

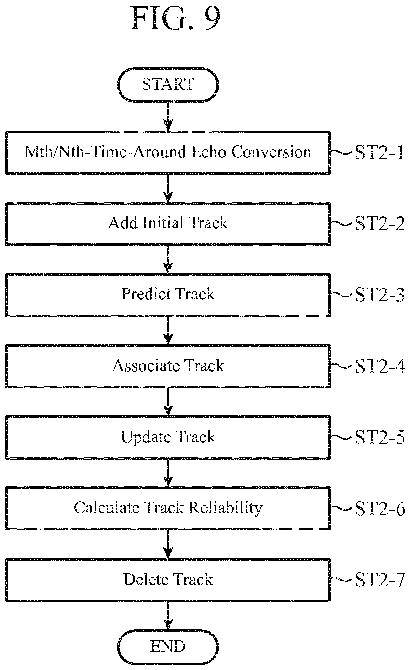

Next, the operation of the mth/nth-time-around echo tracking filter unit 8 and the track reliability calculating unit 4 at time k will be described along a flowchart of FIG. 9.

Note that symbols used hereinafter are the same as those defined in First Embodiment.

In step ST2-1, the mth/nth-time-around echo tracking filter unit 8 performs mth/nth-time-around echo conversion. The mth/nth-time-around echo tracking filter unit 8 moves the position of a detection plot by a certain range from a radar origin 50 in the range direction assuming that the detection plot input from the radar 2 is an observation result of an mth-order or an nth-time-around echo target.

For example, in a case where a detection plot $z_k$ observed where PRI is $T_{PRI}$ is converted, a range $\Delta R_m$ to be moved in a case where it is assumed that the detection plot $z_k$ is an observation result of the mth-time-around echo target is determined from Equation (27). Alternatively, a range $\Delta R_n$ to be moved in a case where it is assumed that the detection plot $z_k$ is an observation result of the nth-time-around echo target is determined from Equation (28).

$$\Delta R_m = \frac{c(m-1)}{2}T_{PRI} \qquad (27)$$

$$\Delta R_n = \frac{c(n-1)}{2}T_{PRI} \qquad (28)$$

At this time, an mth-time-around echo detection plot $z_{k,m}'$ converted as a detection plot of the mth-time-around echo target is as expressed by Equation (29). Meanwhile, an nth-time-around echo detection plot $z_{k,n}'$ converted as a detection plot of the nth-time-around echo target is as expressed by Equation (30).

$$z_{k,m}{}' = \begin{pmatrix} \left(z_{k,\mathrm{R}} + \Delta R_m\right)\cos\left(z_{k,\mathrm{El}}\right)\sin\left(z_{k,\mathrm{By}}\right) \\ \left(z_{k,\mathrm{R}} + \Delta R_m\right)\cos\left(z_{k,\mathrm{El}}\right)\cos\left(z_{k,\mathrm{By}}\right) \\ \left(z_{k,\mathrm{R}} + \Delta R_m\right)\sin\left(z_{k,\mathrm{El}}\right) \end{pmatrix} \qquad (29)$$

$$z_{k,\mathrm{n}}{}' = \begin{pmatrix} \left(z_{k,\mathrm{R}} + \Delta R_n\right)\cos\left(z_{k,\mathrm{El}}\right)\sin\left(z_{k,\mathrm{By}}\right) \\ \left(z_{k,\mathrm{R}} + \Delta R_n\right)\cos\left(z_{k,\mathrm{El}}\right)\cos\left(z_{k,\mathrm{By}}\right) \\ \left(z_{k,\mathrm{R}} + \Delta R_n\right)\sin\left(z_{k,\mathrm{El}}\right) \end{pmatrix} \qquad (30)$$

Letters $z_{k,R}$, $z_{k,By}$, and $z_{k,El}$ in Eqs. (29) and (30) represent detection plots in a polar coordinate system and are defined by Eq. (7).

In the following steps ST 2-2 to ST 2-7, the aforementioned mth-time-around echo detection plot and nth-time-around echo detection plot are not distinguished and regarded as a "detection plot $z_k$ at time k".

In step ST2-2, the mth/nth-time-around echo tracking filter unit 8 performs addition of an initial track. The mth/nth-time-around echo tracking filter unit 8 generates a new candidate tracking track at time k - 1, that is, an initial track, on the basis of past detection plots. The past detection plots include two types of detection plots: mth-time-around echo detection plots and nth-time-around echo detection plots. However, as described in step ST2-1, the initial track is generated here without distinguishing the respective detection plots.

As in First Embodiment, the initial track is set in accordance with Eqs. (8) and (9).

In step ST2-3, the mth/nth-time-around echo tracking filter unit 8 performs track prediction. The mth/nth-time-around echo tracking filter unit 8 determines predicted tracks at time k on the basis of the initial track generated in step ST2-2, the tracking track output by the mth-time-around echo tracking filter unit 3-m at previous time k - 1, the tracking track output by the nth-time-around echo tracking filter unit 3-n at the previous time k - 1, and the tracking track output by the mth/nth-time-around echo tracking filter unit 8 at the previous time k - 1.

As in First Embodiment, the predicted tracks are generated from Eqs. (11) and (12). There are three types of predicted tracks generated here, one is a predicted track generated from the mth-time-around echo track, another is a predicted track generated from the nth-time-around echo track, and the other is a predicted track generated from the mth/nth-time-around echo track and the initial track. In the following steps ST2-4 to ST2-7, any type of predicted track is referred to as a "predicted track at time k" without distinction.

In step ST2-4, the mth/nth-time-around echo tracking filter unit 8 performs track association. The mth/nth-time-around echo tracking filter unit 8 extracts detection plots at time k located in the neighborhood of the predicted track at time k and narrows down to detection plots used for updating the predicted track in the next step ST2-5.

The method of extracting detection plots in the neighborhood of the predicted track is performed using, for example, Ineq. (16) as in First Embodiment. As described in step ST 2-1 and step ST 2-3, the types of detection plots (mth-time-around echo detection plot or nth-time-around echo detection plot) and the types of predicted tracks (predicted track generated from the mth echo track, predicted track generated from the nth-time-around echo track, or predicted track generated from the mth/nth-time-around echo track) are not distinguished here.

In step ST2-5, the mth/nth-time-around echo tracking filter unit 8 performs track update. The mth/nth-time-around echo tracking filter unit 8 generates a tracking track at time k from the predicted track and detection plots in an association gate thereof. In addition, the mth/nth-time-around echo tracking filter unit 8 also generates a track that represents a case where the predicted track is not observed as a detection plot at time k as a tracking track at time k.

A method of generating a tracking track from the predicted track and the detection plots in the association gate is performed using Eqs. (18), (19), (21), and (22) as in First Embodiment.

In step ST2-6, the track reliability calculating unit 4 paired with the mth/nth-time-around echo tracking filter unit 8 performs calculation of track reliability. The track reliability calculating unit 4 calculates track reliabilities of the tracking tracks generated in step ST2-5 from the predicted tracks and the detection plots in the association gate thereof.

The track reliability is calculated from Eqss (23), (24), and (25) as in First Embodiment.

In step ST2-7, the track reliability calculating unit 4 paired with the mth/nth-time-around echo tracking filter unit 8 performs deletion of tracks. The track reliability calculating unit 4 deletes tracking tracks having a low track reliability from among the tracking tracks at time k having been generated in step ST2-6 in order to delete tracks generated and updated only by false detection. The mth/nth-time-around echo tracking filter unit 8 outputs a plurality of tracking tracks which have not been deleted here to the track determining unit 6 as "mth/nth-time-around echo tracking tracks at time k".

A condition for deleting a track is defined by Ineq. (26) as in First Embodiment.

As a result of the above steps ST2-1 to ST2-7, the mth/nth-time-around echo tracking filter unit 8 and the track reliability calculating unit 4 paired with the mth/nth-time-around echo tracking filter unit 8 operate. The mth/nth-time-around echo track output from the track reliability calculating unit 4 and the track reliability thereof form a candidate display track to be selected by the track determining unit 6 by a similar operation to that in First Embodiment.

Note that, although not illustrated, the target tracking apparatus 1 may include two or more of the mth-time-around echo tracking filter unit 3-m, the nth-time-around echo tracking filter unit 3-n, and the mth/nth-time-around echo tracking filter unit 8. For example, under an observation condition that a third-time-around echo target is detected, the target tracking apparatus 1 may include a first-time-around echo tracking filter unit, a second-time-around echo tracking filter unit, a third-time-around echo tracking filter unit, a first/second-time-around echo tracking filter unit, and a second/third-time-around echo tracking filter unit.

According to Second Embodiment configured in the above manner, even in a case where a target approaching from a distant location or moving away to a distant location is observed, or even when a PRI is small and the number of orders of multiple-time-around echoes is likely to change during observation, a tracking track of the target can be obtained. This is because the mth/nth-time-around echo tracking filter unit 8 generates a tracking track of the target that crosses the boundary of the maximum observation range $R_{max}$ by updating the tracking track having been represented as the mth-time-around echo target at previous time with a detection plot of the latest time when the target is assumed as the nth-time-around echo target and updating a track representing the nth-time-around echo target with a detection plot assuming the mth-time-around echo target.

Third Embodiment.

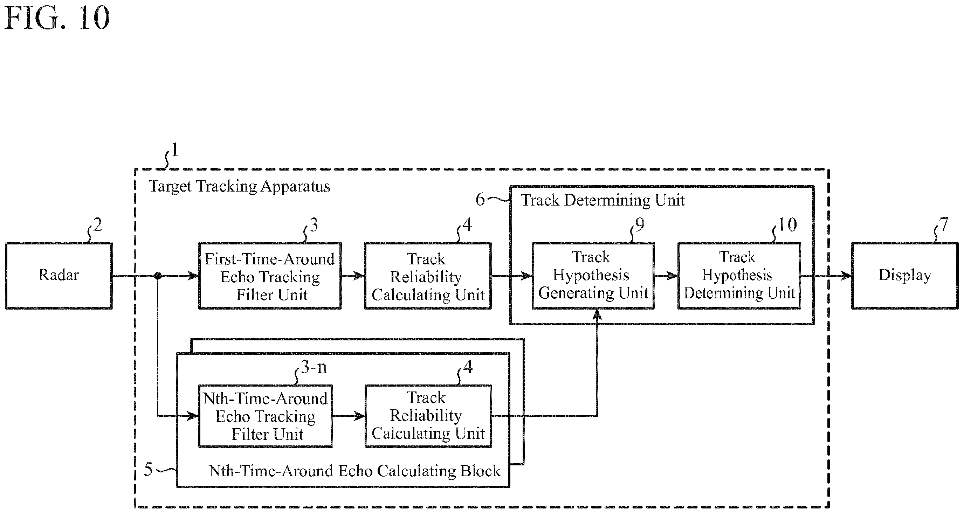

FIG. 10 is a block diagram illustrating an exemplary configuration of a target tracking apparatus 1 according to Third Embodiment of the disclosure. As illustrated in FIG. 10, the target tracking apparatus 1 according to Third Embodiment includes nth-time-around echo tracking filter units 3-n, track reliability calculating units 4, nth-time-around echo calculating blocks 5, and a track determining unit 6. The track determining unit 6 includes a track hypothesis generating unit 9 and a track hypothesis determining unit 10.

Note that implementation method and the operation of the nth-time-around echo tracking filter units 3-n, the track reliability calculating units 4, and the nth-time-around echo calculating blocks 5 are similar to those of First Embodiment, and thus descriptions thereof will be omitted.

The track hypothesis generating unit 9 and the track hypothesis determining unit 10 are embodied by the processor 101 that executes a program stored in the memory 102 in FIG. 3. By executing a program stored in the memory 102 by the processor 101, functions of the track hypothesis generating unit 9 and the track hypothesis determining unit 10 are implemented.

In First and Second Embodiments, as can be seen from that one track having the highest reliability is selected in the track determining unit 6, a likely tracking track is determined assuming that there is one target present within an observation area at most. However, in a case where the target tracking apparatus 1 is used with the radar 2 that observes a broad range, since multiple targets may be present within the observation area, the above premise of First and Second Embodiments does not hold.

Accordingly, in Third Embodiment, the track hypothesis generating unit 9 generates, from among a large number of candidate tracking tracks generated by the first-time-around echo tracking filter unit 3 and the nth-time-around echo tracking filter unit 3-n, a combination of tracking tracks that may be implemented simultaneously, and the track hypothesis determining unit 10 selects a combination of tracking tracks having the highest total of track reliability, and outputs respective tracking tracks included in the selected combination to the display 7. A combination of tracking tracks will be hereinafter referred to as a "track hypothesis".

Here, the "combination of tracking tracks that may be implemented simultaneously" is defined as that a detection plot history used for track update of a certain tracking track in step ST1-5 of FIG. 5 and a detection plot history used for track update of another tracking track in step ST1-5 of FIG. 5 do not include the same detection plot.

For example, a certain tracking track T1 generated from past detection plots $z_1^{(T1)}$, $z_2^{(T1)}$, ..., $z_k^{(T1)}$ and another tracking track T2 generated from past detection plots $z_1^{(T2)}$, $z_2^{(T2)}$, ..., $z_k^{(T2)}$ are assumed. Here, if there is an overlap in any of the detection plots, that is, if $z_{k'}^{(T1)} = z_{k'}^{(T2)}$ holds at any of time k', since the overlapped detection plot is a result of observing one of the tracking track T1 and the tracking track T2, the tracking track T1 and the tracking track T2 cannot be implemented simultaneously.

However, under this condition, the longer observation time is, the more a detection plot history has to be traced thus the higher a processing load becomes. In the description of the operation to be described later, as practical processing an overlap is determined only for detection plots at time of past L times.

The track hypothesis generating unit 9 receives the first-time-around echo track and the track reliability thereof from the track reliability calculating unit 4 paired with the first-time-around echo tracking filter unit 3 and receives the nth-time-around echo track and the track reliability thereof from the track reliability calculating unit 4 paired with the nth-time-around echo tracking filter unit 3-n. Then, the track hypothesis generating unit 9 generates a track hypothesis combining one or more tracking tracks from among the large number of tracking tracks having been received and outputs the track hypothesis to the track hypothesis determining unit 10.

The track hypothesis determining unit 10 receives the track hypothesis from the track hypothesis generating unit 9 and calculates the total of track reliability of tracking tracks included in the track hypothesis. The total of track reliability of the tracking tracks included in the track hypothesis is referred to as "hypothesis reliability". Then, the track hypothesis determining unit 10 outputs a single or a plurality of tracking tracks included in a track hypothesis having the maximum hypothesis reliability to the display 7 as a "display track".

The display 7 receives one or more display tracks from the track hypothesis determining unit 10 and displays motion characteristics such as the position or the velocity of the target included in each display track, a value representing an error in an estimated value of the motion characteristics, an order of a multiple-time-around echo, or the track reliability.

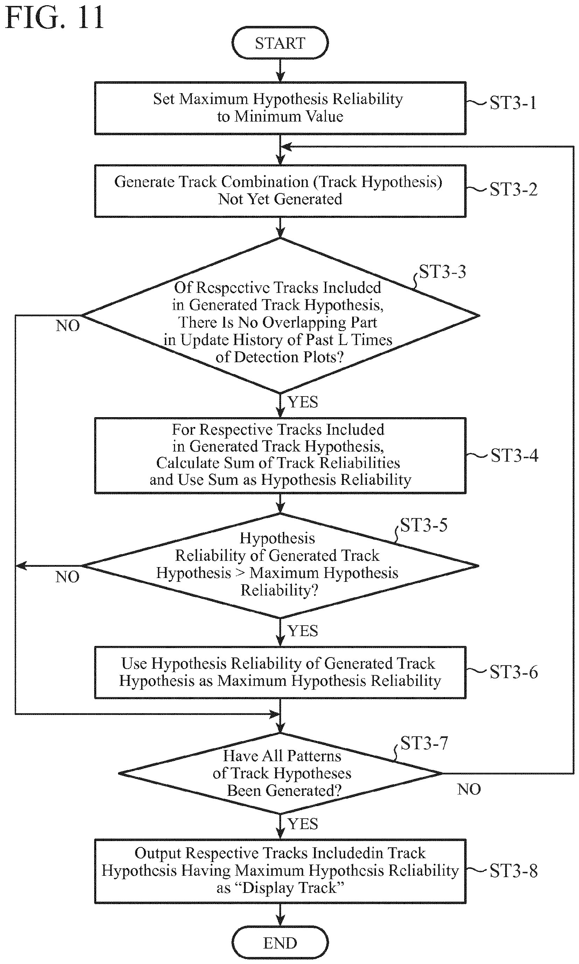

Next, the operation of the track hypothesis generating unit 9 and the track hypothesis determining unit 10 at time k will be described along the flowchart of FIG. 11.

Note that, in the following, n is an integer larger than or equal to 1, and the operations of the first-time-around echo tracking filter unit 3 will be described together as the operation of the nth-time-around echo tracking filter unit 3-n where n = 1.

The track hypothesis generating unit 9 and the track hypothesis determining unit 10 receive the nth-time-around echo track at time k and the track reliability thereof from each of the track reliability calculating units 4 paired with the nth-time-around echo tracking filter units 3-n and performs processing illustrated in the flowchart of FIG. 11.

First in step ST3-1, the track hypothesis determining unit 10 sets provisional maximum hypothesis reliability to the minimum value, that is, the minimum negative value in a program.

In step ST3-2, the track hypothesis generating unit 9 generates a track hypothesis by combining tracking tracks of combinations not yet generated in processing at time k from among the received nth-time-around echo tracks. At this time, it is assumed that one or more tracking tracks are included in the track hypothesis, and which multiple-time-around echo is assumed in each of the tracking track is not distinguished.

In step ST3-3, the track hypothesis generating unit 9 compares, for each of the tracking tracks included in the generated track hypothesis, detection plot histories used in track update in step ST1-5 of FIG. 5 from time k to time k - L. Note that L is an integer larger than or equal to 0 and is a parameter that determines a balance between performance and a processing load. The larger the L is, the higher the estimation precision of a track hypothesis becomes while the processing load becomes higher.

If the same detection plot is included in the history of the past L times of detection plots of each tracking tracks included in the track hypothesis generated in step ST3-2 ("NO" in step ST3-3), the track hypothesis generating unit 9 determines that the track hypothesis is not a "combination of tracking tracks that may be implemented simultaneously" and rejects the track hypothesis and proceeds to step ST3-7. On the other hand, if the same detection plot is not included in the history of the past L times of detection plots of each tracking tracks ("YES" in step ST3-3), the track hypothesis generating unit 9 determines that the track hypothesis is a "combination of tracking tracks that may be implemented simultaneously" and proceeds to step ST3-4.

In step ST3-4, the track hypothesis determining unit 10 receives a track hypothesis determined to be a "combination of tracking tracks that may be implemented simultaneously" from the track hypothesis generating unit 9, calculates the sum of track reliability of the respective tracking tracks included in the received track hypothesis to obtain a hypothesis reliability. Hypothesis reliability is a value representing how many likely tracking tracks are included in a track hypothesis. As the value is larger, the value indicates that the track hypothesis is a combination of likely tracking tracks.

In step ST3-5, the track hypothesis determining unit 10 compares the hypothesis reliability obtained in step ST3-4 with the provisional maximum hypothesis reliability. If the hypothesis reliability obtained in step ST3-4 is larger than the provisional maximum hypothesis reliability ("YES" in step ST3-5), the track hypothesis determining unit 10 proceeds to step ST3-6. On the other hand, if the hypothesis reliability obtained in step ST3-4 is smaller than or equal to the provisional maximum hypothesis reliability ("NO" in step ST3-5), the track hypothesis determining unit 10 skips step ST3-6 and proceeds to step ST3-7.

In step ST3-6, the track hypothesis determining unit 10 overwrites the provisional maximum hypothesis reliability with the hypothesis reliability of step ST3-4.

In step ST3-7, the track hypothesis generating unit 9 determines whether all patterns of track hypotheses have been generated from the received nth-time-around echo tracks. If all patterns of track hypotheses have been generated ("YES" in step ST3-7), the track hypothesis generating unit 9 proceeds to step ST3-8. On the other hand, if there is a track hypothesis not yet combined ("NO" in step ST3-7), the track hypothesis generating unit 9 returns to step ST3-2.

In step ST3-8, the track hypothesis determining unit 10 receives a notification that all patterns of track hypotheses have been generated from the track hypothesis generating unit 9 and outputs all the tracking tracks included in a track hypothesis having the maximum hypothesis reliability at this time point to the display 7 as a "display track".

As a result of the above steps ST 3-1 to ST 3-8, the single or the plurality of display tracks are output to the display 7.

Note that, in the above description, the track hypothesis generating unit 9 and the track hypothesis determining unit 10 in Third Embodiment are used with the first-time-around echo tracking filter unit 3, the track reliability calculating unit 4, and the nth-time-around echo calculating block 5 in First Embodiment. However, the track hypothesis generating unit 9 and the track hypothesis determining unit 10 in Third Embodiment may be used with the mth-time-around echo tracking filter unit 3-m, the nth-time-around echo tracking filter unit 3-n, the mth/nth-time-around echo tracking filter unit 8, and the track reliability calculating unit 4 in Second Embodiment.

According to Third Embodiment configured in the above manner, even when a plurality of targets having different orders of multiple-time-around echoes are simultaneously observed, a tracking track of each of the targets can be obtained. This is because the track hypothesis generating unit 9 and the track hypothesis determining unit 10 do not share a detection plot having the same tracking track and output a combination of tracking tracks including the largest number of likely tracking tracks.

This effect is especially advantageous in that, in the case where a plurality of multiple-time-around echo targets having different orders appears on a detection plot, in the vicinity thereof, output from the radar 2, an event becomes unlikely to occur that a tracking track of a multiple-time-around echo track of a certain order shifts to a multiple-time-around echo of another order since the respective tracking tracks to be displayed are determined on the premise that the respective tracking tracks do not include the same detection plot.

Furthermore, unlike Multiple PRI ranging which requires detection plots obtained by more discrete PRIs as the number of targets that are simultaneously observed increases, a difference from the conventional technique is that each track can be estimated for any number of multiple-time-around echo targets from a time series of detection plots of at least two discrete PRIs. This is because the track hypothesis generating unit 9 generates a combination of tracking tracks without setting an upper limit to the number of targets.

Meanwhile, in the above descriptions, the example in which the target tracking apparatus 1 is used for estimating a track of a target on the basis of observation results of a radar apparatus has been explained. However, it should be understood without saying that the target tracking apparatus 1 can also be used with ranging sensors such as a ranging sensor using sound waves, other than radars.

Note that, within the scope of the present invention, the present invention may include a flexible combination of Embodiments, a modification of any component of each Embodiment, or omission of any component in each Embodiment.

INDUSTRIAL APPLICABILITY

A target tracking apparatus according to the present disclosure estimates a correct track of a target with respect to multiple-time-around echoes and thus is suitable for use with a radar apparatus or other apparatuses for observing a target with multiple discrete PRIs.

REFERENCE SIGNS LIST

1: target tracking apparatus, 2: radar, 3: first-time-around echo tracking filter unit, 3-m: mth-time-around echo tracking filter unit, 3-n: nth-time-around echo tracking filter unit, 4: track reliability calculating unit, 5: nth-time-around echo calculating block, 6: track determining unit, 7: display device, 8: mth/nth-time-around echo tracking filter unit (multiple-time-around echo tracking filter unit), 9: track hypothesis generating unit, 10: track hypothesis determining unit, 50: radar origin, 51: first-time-around echo target, 52: second-time-around echo target, 53: third-time-around echo target, 54: first-time-around echo, 55: second-time-around echo, 56: third-time-around echo, 61: first-time-around echo track, 62: second-time-around echo track, 63: third-time-around echo track, 64: missed detection, 65: false detection, 66: mth/nth-time-around echo track, 101: processor, 102: memory, 103: input device, 104: output device

**Claims**

1. A target tracking apparatus, comprising:

   nth-time-around echo tracking filter units for generating a respective candidate track of a target from information of the target on an assumption that n is an integer larger than or equal to 1 and that the target to be observed is present at a range observed as an nth-time-around echo with a premise that the information of the target observed by a sensor includes missed detection of the target or false detection of the target;
   a track reliability calculating unit for calculating a track reliability representing likelihood of each candidate track generated by the nth-time-around echo tracking filter units with the premise that the information of the target includes missed detection of the target or false detection of the target; and

a track determining unit for determining a track to be displayed on a display from among the candidate tracks generated by the nth-time-around echo tracking filter units on a basis of the track reliabilities calculated by the track reliability calculating unit.

2. The target tracking apparatus according to claim 1, further comprising:
a multiple-time-around echo tracking filter unit for generating a candidate track of the target from the information of the target observed by the sensor on an assumption that the target is present at a range at which the target is observed as echoes with different orders.

3. The target tracking apparatus according to claim 1,
wherein the track determining unit comprises:

a track hypothesis generating unit for generating combinations of tracks that are feasible at a same observation time from among the candidate tracks of the target; and
a track hypothesis determining unit for determining a combination of tracks to be displayed on the display from among the combinations of tracks generated by the track hypothesis generating unit on a basis of the track reliabilities calculated by the track reliability calculating unit.

# FIG. 1

## FIG. 2A

## FIG. 2B

# FIG. 3

```
        ┌─101          ┌─102
   ┌──────────┐    ┌──────────┐
   │ Processor │────│  Memory  │
   └──────────┘    └──────────┘
        │
────────┼──────────────────────────
        │          │
   ┌─103│      ┌─104│
   ┌──────────┐    ┌──────────┐
   │  Input   │    │  Output  │
   │  Device  │    │  Device  │
   └──────────┘    └──────────┘
```

## FIG. 4A

×: Detection Plot using PRI1
□: Detection Plot using PRI2
o: Detection Plot using PRI3

## FIG. 4B

×: Detection Plot using PRI1
□: Detection Plot using PRI2
o: Detection Plot using PRI3

## FIG. 4C

×: Detection Plot using PRI1
□: Detection Plot using PRI2
o: Detection Plot using PRI3

# FIG. 5

START

Nth-Time-Around Echo Conversion — ST1-1

Add Initial Track — ST1-2

Predict Track — ST1-3

Associate Track — ST1-4

Update Track — ST1-5

Calculate Track Reliability — ST1-6

Delete Track — ST1-7

END

# FIG. 6

```
                    ┌─────────────┐
                    │    START    │
                    └──────┬──────┘
                           │
           ┌───────────────▼───────────────┐
           │     Set Maximum Reliability    │ ～ST1-8
           │        to Minimum Value        │
           └───────────────┬───────────────┘
                           │
           ┌───────────────▼───────────────┐
           │   Select One Unselected Track  │ ～ST1-9
           └───────────────┬───────────────┘
                           │
                    ┌──────▼──────┐  ST1-10
              NO   ◇ Track Reliability of Selected Track > ◇
           ◄───────◇    Maximum Reliability?    ◇
                    └──────┬──────┘
                           │ YES
           ┌───────────────▼───────────────┐
           │ Set Track Reliability of Selected Track │ ～ST1-11
           │      to Maximum Reliability      │
           └───────────────┬───────────────┘
                           │
                    ┌──────▼──────┐  ST1-12
                   ◇  Have All Tracks  ◇   NO
                   ◇  Been Selected?  ◇───────┐
                    └──────┬──────┘
                           │ YES
           ┌───────────────▼───────────────┐
           │       Output Track Having        │ ～ST1-13
           │ Maximum Reliability as "Display Track" │
           └───────────────┬───────────────┘
                           │
                    ┌──────▼──────┐
                    │     END     │
                    └─────────────┘
```

# FIG. 7

# FIG. 8

X: Detection Plot using PRI1
□: Detection Plot using PRI2
O: Detection Plot using PRI3

$m \times R_{max}$

50

66

# FIG. 9

START

↓

| Mth/Nth-Time-Around Echo Conversion | ~ST2-1 |

↓

| Add Initial Track | ~ST2-2 |

↓

| Predict Track | ~ST2-3 |

↓

| Associate Track | ~ST2-4 |

↓

| Update Track | ~ST2-5 |

↓

| Calculate Track Reliability | ~ST2-6 |

↓

| Delete Track | ~ST2-7 |

↓

END

# FIG. 10

Target Tracking Apparatus — 1

Radar — 2

First-Time-Around Echo Tracking Filter Unit — 3

Track Reliability Calculating Unit — 4

Track Determining Unit — 6

Track Hypothesis Generating Unit — 9

Track Hypothesis Determining Unit — 10

Display — 7

Nth-Time-Around Echo Tracking Filter Unit — 3-n

Track Reliability Calculating Unit — 4

Nth-Time-Around Echo Calculating Block — 5

EP 3 392 671 A1

FIG. 11

```
                          ( START )
                              │
                              ▼
        ┌───────────────────────────────────────────┐
        │       Set Maximum Hypothesis Reliability    │  ~ST3-1
        │              to Minimum Value               │
        └───────────────────────────────────────────┘
                              │
                              ▼
        ┌───────────────────────────────────────────┐
        │  Generate Track Combination (Track Hypothesis) │  ~ST3-2
        │              Not Yet Generated              │
        └───────────────────────────────────────────┘
                              │
                              ▼
                          ◇ ST3-3
        Of Respective Tracks Included
        in Generated Track Hypothesis,
  NO    There Is No Overlapping Part
        in Update History of Past L Times
        of Detection Plots?
                              │ YES
                              ▼
        ┌───────────────────────────────────────────┐
        │        For Respective Tracks Included       │
        │          in Generated Track Hypothesis,     │  ~ST3-4
        │        Calculate Sum of Track Reliabilities │
        │        and Use Sum as Hypothesis Reliability │
        └───────────────────────────────────────────┘
                              │
                              ▼
                          ◇ ST3-5
                 Hypothesis
        Reliability of Generated Track
  NO    Hypothesis > Maximum Hypothesis
                 Reliability?
                              │ YES
                              ▼
        ┌───────────────────────────────────────────┐
        │  Use Hypothesis Reliability of Generated Track │  ~ST3-6
        │  Hypothesis as Maximum Hypothesis Reliability │
        └───────────────────────────────────────────┘
                              │
                              ▼
                          ◇ ST3-7
                 Have All Patterns
                 of Track Hypotheses        NO
                 Been Generated?
                              │ YES
                              ▼
        ┌───────────────────────────────────────────┐
        │    Output Respective Tracks Included in Track │
        │  Hypothesis Having Maximum Hypothesis Reliability │  ~ST3-8
        │               as "Display Track"             │
        └───────────────────────────────────────────┘
                              │
                              ▼
                          ( END )
```

## INTERNATIONAL SEARCH REPORT

| International application No. |
| --- |
| PCT/JP2016/050254 |

### A. CLASSIFICATION OF SUBJECT MATTER
*G01S13/66*(2006.01)i, *G01S13/12*(2006.01)i, *G08G5/00*(2006.01)i

According to International Patent Classification (IPC) or to both national classification and IPC

### B. FIELDS SEARCHED

Minimum documentation searched (classification system followed by classification symbols)
G01S7/00-7/42, 13/00-13/95, G08G1/00-99/00

Documentation searched other than minimum documentation to the extent that such documents are included in the fields searched
Jitsuyo Shinan Koho         1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2011-145096 A  (Mitsubishi Electric Corp.), 28 July 2011 (28.07.2011), claim 1; paragraphs [0031] to [0067] (Family: none) | 1-3 |
| A | JP 2005-91174 A  (Director General of Technical Research and Development Institute of Defense Agency), 07 April 2005 (07.04.2005), paragraphs [0032] to [0036] (Family: none) | 1-3 |
| A | JP 2015-121473 A  (Mitsubishi Electric Corp.), 02 July 2015 (02.07.2015), entire text; all drawings (Family: none) | 1-3 |

☒ Further documents are listed in the continuation of Box C.       ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 March 2016 (25.03.16) | 05 April 2016 (05.04.16) |

| Name and mailing address of the ISA/ | Authorized officer |
| --- | --- |
| Japan Patent Office 3-4-3,Kasumigaseki,Chiyoda-ku, Tokyo 100-8915,Japan | Telephone No. |

Form PCT/ISA/210 (second sheet) (January 2015)

**INTERNATIONAL SEARCH REPORT**

International application No.

PCT/JP2016/050254

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-261739 A (Mitsubishi Electric Corp.), 30 October 2008 (30.10.2008), entire text; all drawings (Family: none) | 1-3 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H6138215 A

### Non-patent literature cited in the description

- **M. SKOLNIK.** Radar Handbook Third Edition. Mc-Graw-Hill, February 2008, 4.31-4.33
- **FUKAO SHOICHIROU ; HAMAZU KYOSUKE.** Kisho To Taiki No Reidaa Rimoute Senshingu. Kyoto University Press, 30 March 2009, 285-287
- **G.C.DEMOS ; R.A.RIBAS ; T.J.BROIDA ; S.S.BLACKMAN.** Applications of MHT to Dim Moving Targets. *Proceedings of SPIE, Signal and Data Processing of Small Targets 1990,* October 1990, vol. 1305, 297-309